# EUROPEAN PATENT APPLICATION

(11) **EP 4 636 670 A1**
(43) Date of publication of application: **22.10.2025**
(21) Application number: 25152280.1
(22) Date of filing: 16.01.2025
(51) Int. Cl.: G06Q 20/02, G06Q 20/06, G06Q 20/38, G06Q 20/40

(54) **DIGITAL CURRENCY PAYMENT PROCESSING PLATFORM**

(30) Priority: 16.01.2024 US 202418414234
(71) Applicant: Kregar, Tomaz, Lewes, Delaware 19958 (US); Kregar, Igor, Lewes, Delaware 19958 (US); Tate, Joshua, Lewes, Delaware 19958 (US); Erbey, William C., Lewes, Delaware 19958 (US)
(72) Inventor: Kregar, Tomaz, Lewes, Delaware 19958 (US); Kregar, Igor, Lewes, Delaware 19958 (US); Tate, Joshua, Lewes, Delaware 19958 (US); Erbey, William C., Lewes, Delaware 19958 (US)
(74) Representative: AWA Sweden AB

(57) **Abstract**

As disclosed herein is a novel cryptocurrency payment platform and a method of use thereof. The cryptocurrency payment platform includes an application programming interface (API) that allows for the recipient of a cryptocurrency payment from a payor to be able to accept a payment that is different from the amount of cryptocurrency invoiced. The platform also provides the recipient the ability to make programmatic decisions whether to accept or refund cryptocurrency amounts and provide, via the API, the ability to then accept or refund the cryptocurrency. The cryptocurrency payment platform API further permits merchant to be made aware when a late payment has been made, become informed of the amount in fiat currency that the late payment is worth at that point in time, and provide the ability to accept or refund the cryptocurrency.

## Description

### FIELD OF THE INVENTION

The present invention relates to the field of digital currency payment processing platforms. In particular, the present invention relates to cryptocurrency payment processing platforms having application programming interfaces and processing modules that provide the capability to accept cryptocurrency payments notwithstanding conditions that might affect the value of the cryptocurrency payment.

### BACKGROUND OF THE INVENTION

Cryptocurrency is a digital or virtual currency, often referred to as coins or tokens. The currency is secured by cryptography, through the use of decentralized networks based on blockchain technology. The use of cryptography in cryptocurrencies allows cryptocurrency transactions to be secure, pseudonymous, and what is often referred to as "trustless." In other words, cryptocurrency transactions do not require a trusted third party, such as a bank, to facilitate the transactions. Instead, cryptocurrency transactions, such as those involving Bitcoin, rely on public and private key encryption on the decentralized blockchain network. Each user has a private key that is linked to a public key. The keys are cryptographically linked via this peer-to-peer network to ensure the veracity and authenticity of all transactions occurring on the blockchain. The link between the public and private keys allows the blockchain network to identify the correct user. One of the "trustless" aspects of cryptocurrency transactions is that they are generally considered to be irreversible. This inherent safety feature is designed to prevent fraud, such as through double spending.

Cryptocurrency transactions occur on the blockchain network, a massive, public, decentralized ledger that tracks every transaction. Each record or "block" on the blockchain is linked and secured using cryptographic methods through hash values and public-private key encryption. These hash values act as virtual date stamps for each transaction that occurs and are verified by all other blocks on the chain to ensure accuracy.

Once a block is recorded, the transaction and data are permanent. The date stamp on each block ensures that the transaction data existed when the block was published. Because the blocks each contain information about the block before it, they thus create a chain. Each additional block strengthens the chain by reinforcing all the blocks that come before it.

There are thousands of cryptocurrencies in existence. And as cryptocurrencies have grown in popularity, their use in everyday commercial transactions and retail operations have increased. The increase in popularity and use of cryptocurrency in commercial transactions has given rise to unique challenges, not encountered in commercial transactions involving fiat currency, that arise out of the inherent differences between fiat and cryptocurrency, including the decentralized nature of cryptocurrency. The challenges include issues relating to control, volatility, finality, and exchange-rate-disparity.

First, with cryptocurrency payments the payor has full control over the amount of cryptocurrency they are sending. This power shift from payee to payor inevitably leads to the payor possibly entering and sending an incorrect amount of cryptocurrency to the payee. When a payee, such a merchant, receives an incorrect payment from a payor, this causes them to receive either less cryptocurrency than was invoiced (an "underpayment" in which the difference between the expected payment and the received payment may be considered an underage) or more cryptocurrency than was invoiced (an "overpayment" in which the difference between the expected payment and the received payment may be considered an overage). And given the finality of cryptocurrency transactions, this creates a dilemma for the merchant payee.

Second, due to the elevated and often extreme volatility that cryptocurrencies experience, exchange rates between fiat and cryptocurrencies can only be guaranteed or "locked in" for a relatively short fixed period. Therefore, a cryptocurrency processing solution that includes essentially instant and automatic conversion to fiat currency can only lock-in or guarantee an exchange rate for a certain fixed period. Yet, the payor can send cryptocurrency after the lock-in period has timed out ("late payments"). Late payments present additional unique issues for cryptocurrency transactions.

Third, cryptocurrency payments are final and decentralized. So if an incorrect amount is sent, or if a payment is sent to the wrong address, the incorrect amount cannot simply be refunded, canceled, or credited. Instead, the parties must coordinate a method to remedy the error. This issue is further complicated by the decentralized nature of the transaction wherein there is no trusted third party intermediary to assist.

Fourth, the exchange rate between fiat currencies and cryptocurrencies are often disparate and diverging, creating complicating conversions. Once converted from fiat currency to cryptocurrency, the amount of cryptocurrency may be fractional or very large as compared with a more traditional fiat to fiat conversion (*e.g.,* $1 = ~0.00003 Bitcoin, and 1 Bitcoin =~ $30,000). This is further complicated by the volatile nature of cryptocurrency wherein seemingly slight fluctuations in values can have a significant effect on relative exchange rates.

Existing systems have significant limitations associated with the issues described above. Given the differences in control, volatility, finality, and exchange-rate-disparity, there is no current system or method by which a payee can automatically and efficiently process fiat-to-cryptocurrency transactions in a predictable and stable manner, or in a way that ensures financial benefits to the transaction processor or to the recipient of funds in such a transaction. The inability of existing systems to properly address the issues relating to cryptocurrency and transactions involving cryptocurrency has led to an unwillingness of merchants-who are used to relative stability and known performance of fiat currency transactions-to undertake the relative risk and unknowns of using such existing systems for cryptocurrency payments systems. The shortcomings of existing systems and the unique challenges associated with cryptocurrency have therefore impeded a merchant's willingness to adopt cryptocurrency as a viable method of payment for commercial transactions. In view of these challenges, there is a need for a digital currency and transaction platform and method that can address and overcome the issues associated with cryptocurrency and decentralized transactions, in particular solving the issues associated with underpayments, overpayments, and late payments unique to digital currency transactions.

### SUMMARY OF THE INVENTION

Disclosed herein is a digital currency payment platform and method for automatically processing cryptocurrency payments wherein factors unique to cryptocurrency transactions result in customer-initiated payments that are not accurate according to the amount requested in cryptocurrency or in relation to fiat currency values, such as, for example, there is a relative overpayment or underpayment of cryptocurrency from a customer as the result of user error or owing to volatility, or a delayed payment outside of a lock-in period that gives rise to such payment disparities. The cryptocurrency payment platform and method is therefore able to overcome the issues of control, volatility, finality, or exchange-rate-disparity, as well as other issues unique to cryptocurrency.

According to an embodiment of the invention, the cryptocurrency payment platform and method enables a recipient of a cryptocurrency payment from a payor to process payments and make programmatic decisions, based on logic and applicable thresholds, to automatically determine if the payment is an underpayment, or less in value than the amount of cryptocurrency invoiced, and where the difference in value in considered an underage.

In another embodiment of the invention, the cryptocurrency payment platform and method enables a recipient of a cryptocurrency payment from a payor to make programmatic decisions, based on logic and applicable thresholds, to automatically determine if the payment is an overpayment, or more in value than the amount of cryptocurrency invoiced, and where the difference in value is considered an overage.

In yet another embodiment of the invention, the cryptocurrency payment platform and method enables a recipient of a cryptocurrency payment from a payor, to make programmatic decisions, based on logic and applicable thresholds, to automatically determine if the payment is a late payment, meaning a payment that falls outside of an acceptable time period for which an exchange rate can effectively be guaranteed or locked in given the volatility of a given cryptocurrency; or become aware when a late payment has been received.

In an additional embodiment of the invention, the cryptocurrency payment platform and method enables a recipient of a cryptocurrency payment from a payor to make programmatic decisions, based on logic and applicable thresholds, to automatically accept or refund underpayments, overpayments or late payments.

In another embodiment of the invention, the cryptocurrency payment platform and method generates a modified transaction in response to the payment thresholds not being met. Where the received payment amount value is less than the invoiced amount, the modified transaction can include one or more additional payments to provide the overage and bring the total payment amount value up to (or near to) the invoiced amount. Where the received payment amount value is less than or greater than the invoiced amount, the modified transaction can include changing the total amount of the goods or services is changed to reflect the value of the received payment.

These and other aspects and advantages will become apparent to those of ordinary skill in the art by reading the following detailed description, with reference where appropriate to the accompanying drawings. Further, it should be understood that the foregoing summary is merely illustrative and is not intended to limit in any manner the scope or range of equivalents to which the appended claims are lawfully entitled.

### BRIEF DECSRIPTION OF THE DRAWINGS

The invention is described below in connection with the following illustrative figures, wherein:

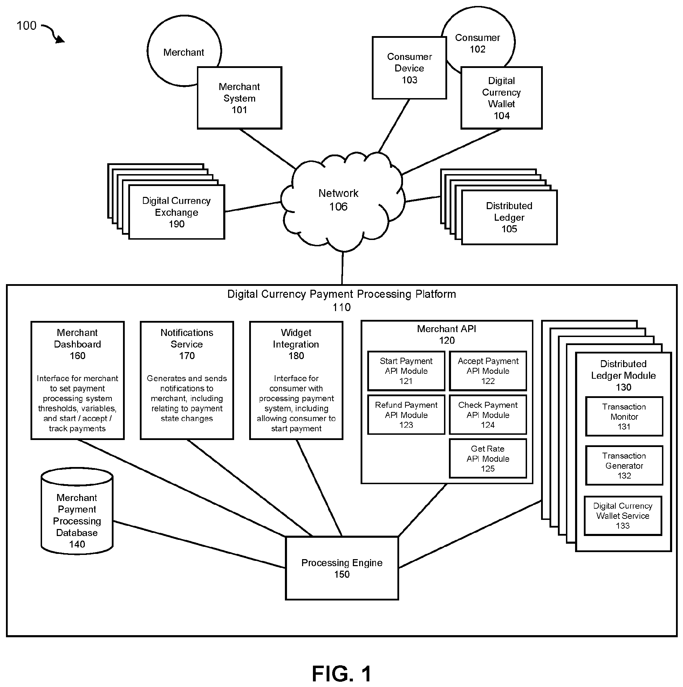

Figure 1 shows a digital currency payment processing platform system 100 according to an embodiment of the invention, wherein the system 100 includes a merchant system 101, consumer device 103, consumer's digital currency wallet 104, one or more distributed ledgers or blockchain components 105, one or more digital currency exchanges 190, and digital currency payment processing platform 110.

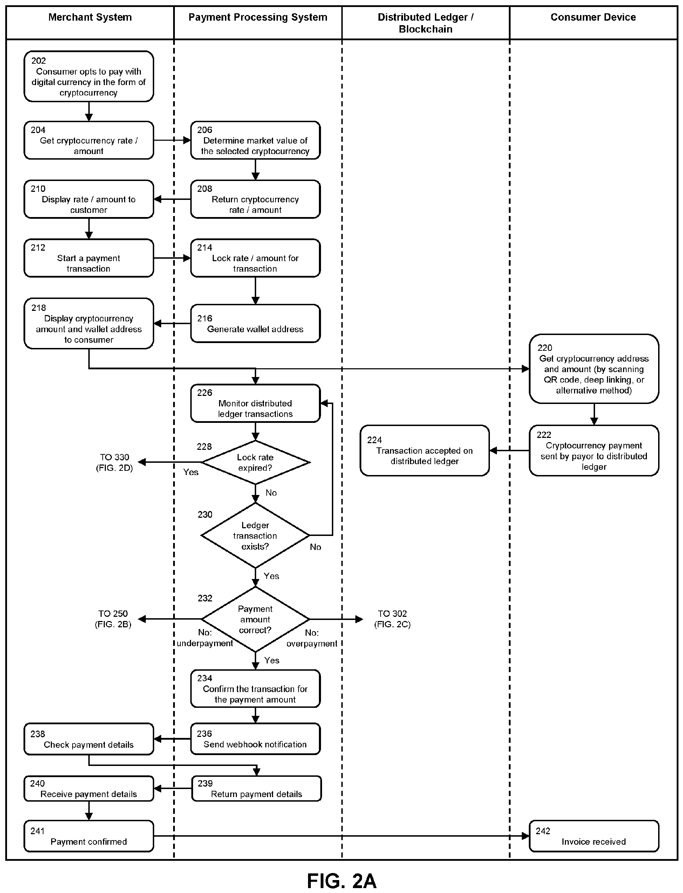

Figure 2A shows a portion of the steps in the process of a cryptocurrency payment processing method as implemented by a digital currency payment processing platform system, according to an embodiment of the invention,

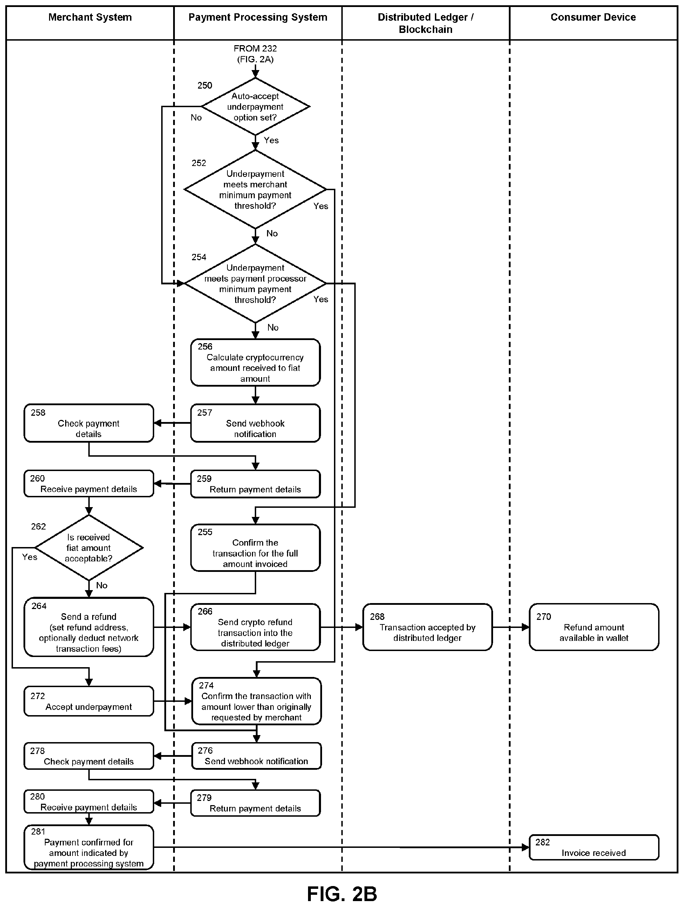

Figure 2B shows a portion of the steps in the process of a cryptocurrency payment processing method as implemented by a digital currency payment processing platform system, according to an embodiment of the invention, and wherein factors relating to the cryptocurrency transaction result in a relative underpayment.

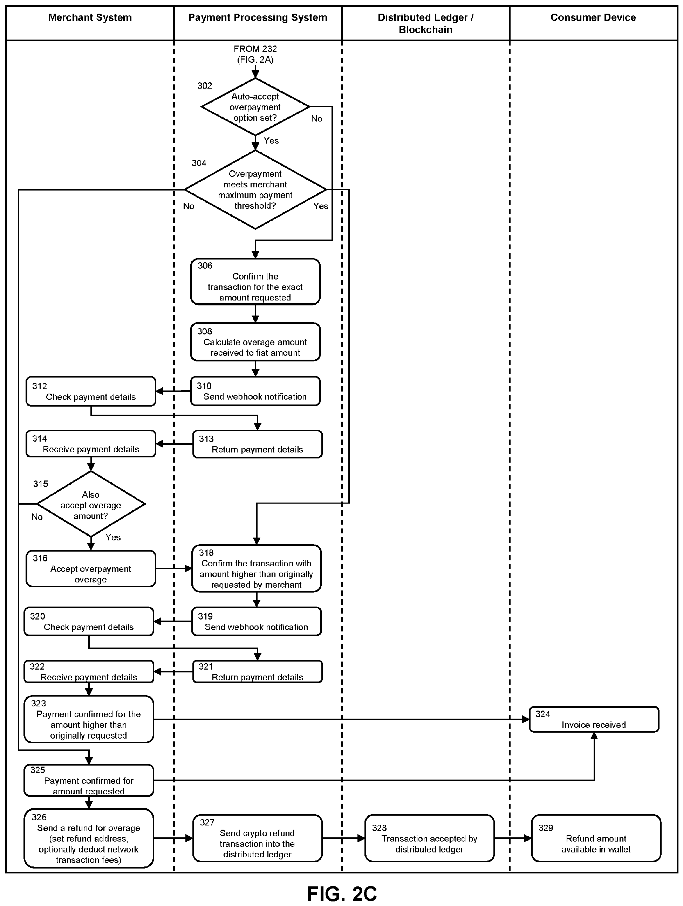

Figure 2C shows a portion of the steps in the process of a cryptocurrency payment processing method as implemented by a digital currency payment processing platform system, according to an embodiment of the invention, and wherein factors relating to the cryptocurrency transaction result in a relative overpayment.

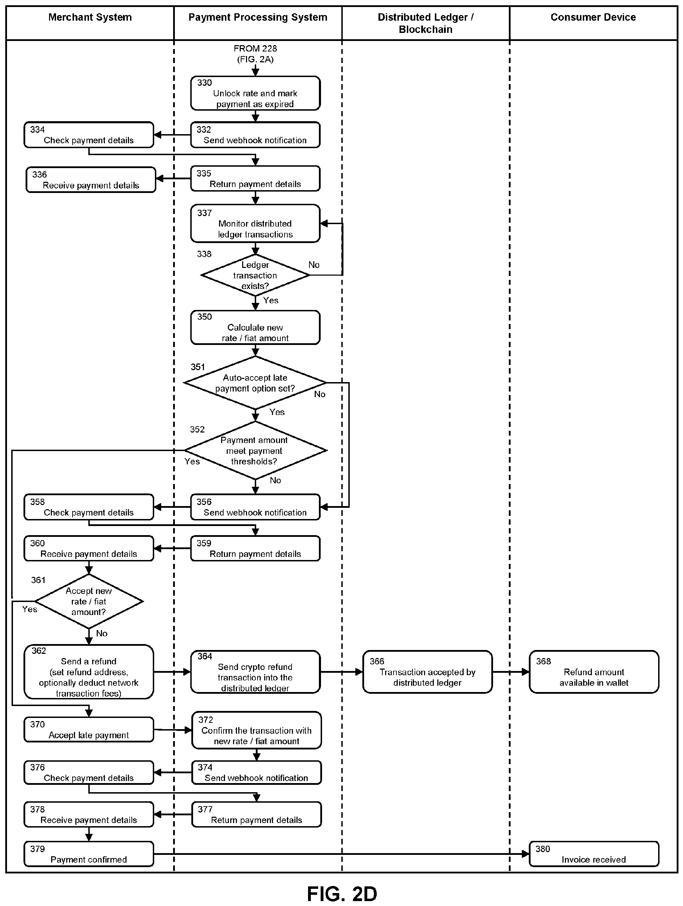

Figure 2D shows a portion of the steps in the process of a cryptocurrency payment processing method as implemented by a digital currency payment processing platform system, according to an embodiment of the invention, wherein factors relating to the cryptocurrency transaction result in a delayed payment.

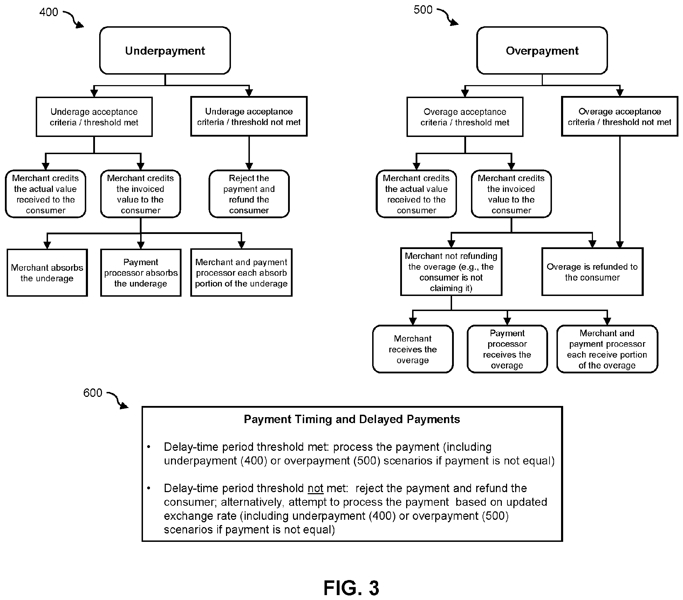

Figure 3 shows the digital currency payment processing scenarios and outcomes implemented through the use of the digital currency payment processing platform 110, according to an embodiment of the invention.

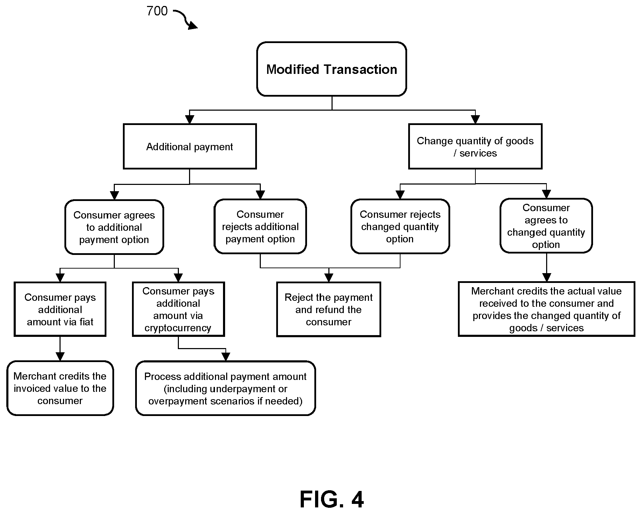

Figure 4 shows modified transaction scenarios and outcomes implemented through use of the digital currency payment processing platform 110, according to an embodiment of the invention.

### DETAILED DESCRIPTION

While the present invention is capable of being embodied in various forms, for simplicity and illustrative purposes, the principles of the invention are described by referring to certain embodiments thereof. It is understood, however, that the present disclosure is to be considered as an exemplification of the claimed subject matter and is not intended to limit the appended claims to the specific embodiments illustrated. It will be apparent to one of ordinary skill in the art that the invention may be practiced without limitation to these specific details. In other instances, well-known methods and structures have not been described in detail so as not to unnecessarily obscure the invention. For example, while embodiments herein are described with reference to cryptocurrency payments, it is understood that the systems and methods may be implemented similarly with respect to payments made via digital currencies or virtual currencies more generally. In addition, a merchant may directly interact directly with the payment processing platform services and API functionality described herein, or may be a sub-merchant that indirectly accesses the payment processing platform services and API functionality through one or more intermediaries. Similarly, the merchant may indirectly interact with the consumer and provide access to the payment processing platform services and API functionality services through one or more intermediaries.

The novel digital currency payment processing platform provides an interface through which a merchant may securely process payments from a payor, such as a client or consumer of the merchant, in order to satisfy a commercial transaction. Through this interface, the merchant is able to generate cryptocurrency payment processing requests of the platform, whereupon the platform is able to monitor the appropriate cryptocurrency blockchain or distributed ledger for activity reflecting an expected payment from the payor. When activity reflecting the expected payment from the payor appears on the blockchain, the system is able to determine whether, for reasons related to unique aspects of digital currency, the amount of cryptocurrency submitted by the payor and reflected on the blockchain is different from the payment expected by the merchant. Based on this determination, the payment processing platform generates notifications to the merchant and further provides a variety of tools by which the payor's payment may still be accepted, despite the disparity between the expected payment and the actual payment, such that the payment is confirmed and the commercial transaction is able to proceed. In particular, the platform provides the merchant with instant notifications of payment disparities. The merchant can utilize the functionality provided by the platform to automatically process such payments provided certain thresholds and other criteria are met, where such thresholds and criteria may be determined by the merchant or by the payment processor. If thresholds are not met, or if automatic processing is not preferred by the merchant, then the merchant can utilize the functionality to determine, based on the notifications generated by the platform relating to the specifics of the disparity, the manner in which to process any payments. The novel functionality provided by the platform described in detail herein provides assurances to the merchant and the client that the anticipated commercial transaction based on cryptocurrency will be able to proceed to completion notwithstanding any issues relating to control, volatility, finality, or exchange-rate-disparity. In this way, the digital currency payment processing platform facilitates the adoption and use of digital currency, such as cryptocurrency, by merchants and consumers as a viable currency to fulfill commercial transactions, either as an alternative or supplement to fiat currency.

Figure 1 shows a digital currency payment processing platform system 100 according to an embodiment of the invention. The system 100 includes a merchant system 101, consumer device 103, digital currency wallet 104, one or more distributed ledger components 105, and digital currency payment processing platform 110. The system also connects with one or more exchanges 190 to determine exchange rates among and between digital currencies and fiat currencies.

Merchant system 101 provides a platform by which goods or services can be purchased by a consumer. In one embodiment, the merchant system 101 is a website operating on one or more servers having an interface, such as a webpage or series of webpages capable of being displayed on consumer devices, through which a consumer can select goods or services for purchase, and then proceed to a purchasing interface, such as a "checkout" page or webpage having similar functionality, where the consumer can proceed with purchasing the selected goods or services. The merchant system 101 may provide the consumer with a variety of goods or services available for purchase from the merchant, and with the ability to select goods and services for purchase by the consumer. Once identified, the merchant system 101 provides the consumer with a total price for the purchase of the goods and services, and further provides the consumer with the ability to identify a means for payment, including one or more digital currencies or cryptocurrencies. In another embodiment, the merchant system 101 is situated at a brick-and-mortar location and is a point-of-sale (POS) system or similar device through which a merchant representative or consumer identifies goods or services for purchase (such as by scanning barcodes attached to such goods), and then proceeds to purchase the goods or services. In such a brick and mortar embodiment, the consumer 102 interacts directly with the merchant in person, as opposed to over a network and through a consumer device, and may rely on a merchant representative, such as a sales representative or employee, to interact with the merchant system (*e.g.,* POS system).

The merchant system 101 connects to the digital currency payment processing platform 110 via an application programming interface (API) connection and invokes the functionality of platform 110 via one or more API calls, as further described below. For security purposes, the API connection is secure, and the merchant system 101 must undergo an authentication process using an API key in order to connect to the payment processing platform.

In addition, the merchant system 101 registers with the digital currency payment processing platform 110 to receive real-time notifications from the platform. The server of the payment processing platform 110 then provides the merchant system 101 with real-time notification when a cryptocurrency payment is sent by the payor to the merchant, and can also send notifications when the payment sent by the payor is not equal to the expected payment (*i.e.*, it is greater to or less than the expected payment). The server of the payment processing platform 110 can also send notifications to the merchant system 101 when a payment sent by the payor that is not equal to the expected payment was automatically accepted because it was within a certain payment amount threshold set by the merchant, or when a payment was automatically rejected because it exceeded such thresholds. The server of the payment processing platform 110 can also send a notification to the merchant system 110 to prompt the merchant for a response regarding actions to be taken (such as acceptance of a payment, rejection of a payment, or issuance of a full or partial refund regarding excess payments) when the payment sent by the payor is not equal to the expected payment, or when the payment sent by the payor exceeds the payment amount thresholds set by the merchant.

As discussed herein, consumer 102 is broadly defined to encompass any persons, entities, or future programs or intelligence capable of or desiring to make a transaction for the goods of services with the merchant system 101. For purposes of illustration, the consumer is an individual seeking to purchase goods or services through interactions with the merchant system 101. In an embodiment where the merchant system 101 is presented through a website, consumer 102 interacts with the merchant system 101 through the consumer device 103, such as a computer or mobile device, via a communication network 106. In embodiments where the consumer is able to interact directly with the merchant system 101, such as brick and mortar establishments, the consumer 102 may interact with the merchant system 101 without the aid of the consumer device 103, and may instead interact with the merchant system 101 directly or through the assistance of a merchant representative, such as a sales associate.

Consumer device 103 is an electronic device through which consumer 102 can interact with other components of system 100 via network 106 or any other communication medium. The consumer device 103 has a display through which the consumer 102 can be presented visual information generated by other components of system 100, such as the merchant system 101, the digital currency wallet 104, and one or more distributed ledgers 105, which may be cryptocurrency blockchains. In addition, the consumer device 103 has one or more input devices through which the consumer 102 can provide input, such as a physical keyboard, a mouse, or a touchscreen display. The consumer device further includes one or more network interfaces through which it can transmit and receive data via a network, such as network 106. The consumer device 103 can be, but is not limited to, an electronic device having input/output, processing, and data communication capabilities, such as desktop, laptop, and tablet computers, mobile phones, personal digital assistants, and gaming devices. The consumer device 103 provides consumer 102 with the ability to interact with the merchant system 101 to browse goods or services made available by the merchant for purchase by the consumer, select goods or service for purchase along with delivery options for such goods and services, and provide payment information to complete the purchase of such goods and services. In one embodiment, the merchant's device for consumers is physically located at a brick-and-mortar location and is a customer-facing POS device through which a consumer can identify and select goods and services for purchase through interaction with the merchant system 101. At the control of the consumer 102, the consumer device 103 communicates with the merchant system 101 and the digital currency wallet 104 via the network 106.

Digital currency wallet 104 is a consumer's system or software for securely storing and managing one or more digital currencies. In one embodiment, the digital currency wallet is a cryptocurrency (or blockchain) wallet service. Known wallet services include devices, physical mediums, programs or online services that store public and private keys for digital currency and cryptocurrency transactions, and allow for the sharing of public keys for purposes of receiving or exchanging funds. Digital currency wallet 104 provides for the storage of private keys for consumer 102, allowing the consumer to gain access to cryptocurrency funds. In this way, the digital currency wallet 104 holds the passwords used to access the cryptocurrency stored on the distributed ledger 105, which may be a cryptocurrency blockchain. Digital currency wallet 104 may further include programming and capabilities that allow consumer 102 to manage their digital assets, including by providing consumer 102 with control of the consumer's private keys, providing the ability to send and receive digital currency and cryptocurrency, and providing the ability to conduct transactions. For example, digital currency wallet 104 keeps a record of all transactions (*e.g.,* sell, buy, exchange transactions) related to consumer's cryptocurrency and operates to send such transactions on one or more distributed ledgers 105. In one embodiment, the consumer 102 interacts with the digital currency wallet 104 via a consumer device 103 and through a network 106. Alternatively, the digital currency wallet 104 may be accessed via a separate device. The digital currency wallet 104 communicates with the distributed ledger 105 through a network, which may be the same as network 106 or a different network.

The distributed ledger 105 stores the details of transactions related to digital assets. The distributed ledger may be any shared digital data system that provides for replicated, shared, and synchronized digital data in order to record the transaction of digital assets. One example of a distributed ledger 105 is cryptocurrency blockchain network. Distributed ledger 105 may be a public, private, or hybrid public-private network, or may be any other type of network that supports distributed ledger technology. In one embodiment, the distributed ledger is a blockchain for a cryptocurrency and operates as a public, decentralized ledger that tracks each transaction that occurs on the network associated with the cryptocurrency. In another embodiment the distributed ledger 105 is private blockchain. In yet another embodiment, the distributed ledger 105 is a hybrid blockchain technology that includes both public and private characteristics. The present invention contemplates all present and future forms, developments, and iterations of blockchain technology and their corresponding networks. The distributed ledger 105 is accessible by the digital currency wallet 104 and the digital currency payment processing platform 110 by way of a communication network, which may be network 106 or a different network. Through the use of a digital currency wallet a user can provide for the transfer of digital assets by recording a transaction of those digital assets. For example, the consumer can use the digital currency wallet 104 to send a transaction of cryptocurrency from his wallet to the merchant on the distributed ledger 105. The digital currency payment processing platform 110 is able to view entries on the distributed ledger 105, and to monitor for transactions occurring on the distributed ledger related to the purchase of goods and services from the merchant by the consumer. The digital currency wallet communicates with the distributed ledger 105 via network 106.

The network 106 may be any network for facilitating communications of data and information between systems, whether wired, wireless, or both, including all presently known communication protocols or those later developed. The network 106 may be any wired network, wireless local area network (LAN), or wide area network (WAN), or a combination of such networks. The network 106 may further be the Internet, or an extranet or intranet, or any combination thereof, or any later developed network technology that facilitates communications and information. The network 106 may use a standard communication technology or protocol such as 3G, 4G, 5G, 802.11, 802.16, or Ethernet. Additionally, the network 106 is capable of using any wired, wireless, or combination of wireless and wired communications technologies, including a variety of communication protocols. It is contemplated that the network 106 may include any communication protocol such as file transfer protocol, hypertext transport protocol, simple mail transfer protocol, and transmission control protocol/Internet protocol. The network 106 functions as the network facilitating communications between the invention's elements. In one embodiment of the invention, the network 106 communicates with the merchant system 101, the consumer device 103, the consumer 102 via the consumer device 103, the digital currency wallet 104, the one or more distributed ledgers 105, the one or more exchanges 190, and the digital currency payment processing platform 110. The distributed ledger 105 communicates with other system components, such as the digital currency wallet 104 and digital currency payment processing platform 110 through a network, which may be the same as network 106 or a different network, or a collection of networks.

The digital payment processing platform 110 provides the interface and functionality through which the merchant system 101 is able to facilitate and process digital currency used by the consumer as payment for goods or services purchased from the merchant. The digital payment processing platform 110 may be housed on one or more servers housed locally with the digital currency processing provider, or externally with one or more cloud computing service providers, or a combination thereof. The digital currency payment processing platform 110 includes a merchant API 120, a merchant payment processing database 140, and one or more distributed ledger modules 130, which, in the case of cryptocurrency may be termed a blockchain module. The merchant API 120 includes various API modules through which the merchant can invoke the functionality of the digital currency payment processing platform. These modules include a start payment API module 121, a check payment API module 124, an accept payment API module 122, and a refund payment API module 123, and a get rate API module 125, whose functionality are described in greater detail below. The digital payment processing platform 110 also includes a merchant dashboard 160, a notifications service 170, and a widget integration 180, each of which is described in greater detail below. The digital payment processing platform 110 also includes a processing engine for processing inputs and outputs to the system and the various sub-components, and for handling communications therebetween.

The distributed ledger systems or blockchain modules 130 each includes a transaction monitor 131 for the distributed ledger, a transaction generator service 132, and the platform's digital currency wallet services 133, the functionality of each of which is described in greater detail below. The merchant profile database 140 stores information and variables related to the merchant's use of the digital currency payment processing platform, including the values of certain payment amount thresholds (including overpayment and underpayment thresholds). The database 140 stores payment processing information, including variables and information relating to merchants, payments, transactions, settlements, as well as user information, including login information such as usernames, passwords, and session information. Although database 140 is shown as a single database, separate databases may be used to store the information used by the system. In one embodiment, the database 140 includes a main database that includes information relating to merchants, payments, transactions, settlements, and other information related to processing of payments by merchants; and a user database that includes login information, usernames, passwords, session information, and other information related specifically to users. In other embodiments, duplicate data may be stored across multiple databases to provide redundancy for purposes of data integrity or to provide backup data availability in the event of system failures. The digital currency payment processing platform 110 interacts with the merchant system 101, and distributed ledger 105 via a communications network, such as network 106.

The merchant dashboard 160 provides a visual interface to the merchant allowing the merchant to access and implement the functionality provided by the API. The merchant dashboard allows the merchant to set up API keys to use with API 120 and configure widget integration 180. It also allows the merchant to start, check, confirm and cancel payments, as well as view information relating to payments, such as viewing a list of all payments that were made. Merchant dashboard 160 is also used to configure notifications to the merchant, as well as set webhook notifications (described herein). The notifications that the merchant can configure include, for example, an option to send an email notification to the merchant regarding certain payment milestones, such as when payment starts, when it is confirmed, when it is canceled, or other milestones or events.

Notification service 170 provides the functionality required for sending notifications, including webhook notifications and email notifications. When email notifications are set on the merchant dashboard 160, the merchant will receive emails for payment milestones, including when a payment starts and upon payment confirmation. Notification service 170 also handles webhook notifications according to their configuration via the merchant dashboard 160. Webhook notifications are sent when a payment state changes, and also for each confirmation change on a pending payment.

Widget integration 180 allows a merchant to easily integrate and provide payment options on their website without creating full API integration and creating their GUI implementation to interact with the payment.

The merchant API 120, along with the merchant dashboard 160 and widget integration 180, provides the interface through which the merchant can call upon the functionality of the digital currency payment processing platform, including the functionality provided by the modules within the merchant API. As described in greater detail below, the start payment API module 121 is called by the merchant system (or manually from the dashboard or widget) to start the payment. The processing engine retrieves variables from the database 140 related to processing a consumer payment and initiates payment processing based on those variables and based on the details of the transaction, such as the type of digital currency or cryptocurrency, the amount of fiat currency being invoiced or requested by the merchant, the corresponding amount of the digital currency or cryptocurrency calculated for a given amount of fiat currency based on the exchange rate (including any surcharges or fees, such as blockchain transaction fees or exchange fees), and a transaction identifier. The accept payment API module 122 is the API endpoint that accepts the payment when called from the merchant system 101. Payment can also be accepted by the processing engine 150 in scenarios where payments are started with parameters that include automatic acceptance of a payment if it falls within the desired threshold that has been set by the merchant system 101. The refund payment API module 123 is the API call that initiates a refund for a transaction that is rejected by the merchant system 102, whether due to an overpayment, underpayment, or late payment. The check payment API module 124 is the API call used to check the details of a given payment, including such details of whether a payment is confirmed or cancelled, how much digital currency or cryptocurrency was received, and the status of a payment (such as whether the payment is awaiting confirmation). In general, when the merchant system 101 receives a webhook notification from the payment processing platform 110, the system will initiate a check of the payment details for a given payment via the check payment API module 124. The merchant system 101 can also periodically request payment details via the check payment API module 124 when no webhook is received. In one embodiment the webhook notification itself includes the payment detail information that would otherwise be provided by calling the check payment API.

The distributed ledger modules 130 interact with distributed ledgers and cryptocurrency blockchains in order to monitor and effectuate digital currency and cryptocurrency transactions. The distributed ledger module 130 includes a transaction monitor service 131, a transaction generator service 132, and a digital currency wallet service 133. Transaction monitor service 131 periodically reviews entries in distributed ledgers, such as cryptocurrency blockchains, for transactions corresponding to expected payments from a consumer to the merchant, and generates notifications concerning the existence and details of the transaction so that these details can be added to the database and provided as needed (for example, in response to a call to the check payment API module 124). Transaction generator service 132 generates distributed ledger transactions (such as full or partial refunds of payments from consumers), signs those transactions, and sends (or broadcasts) those transactions onto distributed ledger networks, such as cryptocurrency blockchains, as described in greater detail below. The digital currency wallet service 133 connects the system to one or more exchanges 190 to determine exchange rates among and between digital currencies and fiat currencies. The platform 110 uses the exchange rate to convert the requested fiat currency for a given transaction into a corresponding digital currency amount. The connection to the exchanges 190 provided by the digital currency wallet service 133 further allows the platform 110 to send digital currencies received via the one or more distributed ledgers 105 to one of the exchanges 190 so that it can be converted to fiat currency (or another digital currency).

Figures 2A through 2D illustrate the operation of the digital currency payment processing platform 110 in connection with the components of the overall system 100 according to an embodiment of the invention. In the example shown in these figures the payor is a consumer or customer of the merchant that interacts with the merchant system 101 through a consumer digital device 103 via an online interface provided by one or more servers on the merchant system 101. In addition, in the example shown in these figures, the digital currency used for payment by the consumer is a cryptocurrency, and the distributed ledger 105 is a blockchain for the selected cryptocurrency. It will be recognized by persons of skill in the art, however, that other forms of digital currency and distributed ledgers may be used in accordance with the systems and methods described herein.

Figure 2A illustrates the initial portion of the operation of the digital currency payment processing platform 110 in connection with the components of the overall system 100, and shows the manner in which the merchant system 101 uses the functionality provided by the digital currency payment processing platform 110 in order to process a digital currency payment in a manner that addresses and overcomes technical issues relating to digital currency and cryptocurrency and transactions involving such virtual currencies. As noted above, prior to initiating payment a consumer 102 uses the consumer device 103 to interact with a merchant system 101 to browse various goods and services (including, but not limited to, other cryptocurrency assets) available for purchase by the merchant and select them for purchase. As noted above, the merchant's goods and services can be browsed via a merchant's online webstore through any network-connected consumer device. For example, the merchant system 101 has one or more servers that host an online interface, and the consumer 102 uses a web browser or other application on the consumer device 103 to communicate with the merchant server system 101, to navigate the online interface provided by the merchant system 101 to build a cart of goods and services that the consumer desires to purchase, and then to "checkout" and proceed with the transaction to pay for those goods or services with the option of using a digital currency wallet (which may be located on the same consumer device 103 or another consumer device) to provide the digital currency payment for the transaction. The merchant's goods and services can also be identified and selected for purchase in a brick-and-mortar store through the assistance of a sales associate or cashier using a POS system to identify the goods and services selected for purchase by the consumer (such as, for example, by scanning such items). In other embodiments, the merchant may provide at the brick-and-mortar location a kiosk or customer-facing POS that allows the consumer to self-select the goods and services for purchase. The merchant system 101 then determines the total amount to be charged, or invoiced, for the goods and services selected in a given fiat currency, including any applicable taxes, fees, or delivery costs, and displays this amount for viewing by the consumer via an interface. In addition, the merchant system 101 provides the consumer 102 with options for paying the amount to be charged, including an option to pay via one or more digital currencies or cryptocurrencies as an alternative to, or in addition to, fiat currency. In one embodiment, the interface of the merchant system 101 displays the total amount to be charged in a given fiat currency, such as USD, and also displays an option to pay the amount in fiat currency along with an option to pay via digital currencies, including a list of digital currencies and cryptocurrencies accepted by the merchant for payment. The list of available digital currencies and cryptocurrencies that can be used for payment are provided to the merchant system 101 by the payment processing platform 110.

As illustrated in Figure 2A, at step 202, the consumer uses the interface provided by the merchant system 101 to indicate that they wish to pay for the identified goods or services with a digital currency, in this case a cryptocurrency, and further selects the specific cryptocurrency that they wish to use. In response to this selection, the merchant system 101 contacts the digital currency payment processing platform 110 to convert the fiat currency amount to an equivalent amount of the selected digital currency or cryptocurrency. At step 204, the merchant system 101 sends a request to the digital currency payment processing platform 110 for the current exchange rate between the fiat currency amount and the selected digital currency or cryptocurrency, along with the amount to be charged to the customer in the selected cryptocurrency. The request to the platform 110 is initiated via an API call to a get rate API module 125, which, as described in steps 206 and 208, returns information including current exchange rates between the fiat currency and one or more supported digital currencies, and the equivalent amount in digital currencies corresponding to the set fiat amount, as provided by digital currency exchanges 190 or by the digital currency wallet service 133 of the distributed ledger module 130. The request sent in step 204 includes the total amount to be charged to the customer in the fiat currency and an identification of the cryptocurrency that the consumer wishes to use. Alternatively, the request in step 204 may simply include an identification of the fiat currency and of the selected cryptocurrency, from which the merchant system 101 can use the exchange rate to calculate the total amount to be charged to the consumer in the selected cryptocurrency. At step 206, the payment processing platform 110 receives the request from the merchant's system 101 to provide the market value of the selected cryptocurrency, and retrieves a current exchange rate between the given fiat currency and the selected cryptocurrency along with the total amount to be charged. The payment processing platform 110 may obtain this current exchange rate from one or more digital currency exchanges, which may be integrated with the payment processing platform or external to the platform. At step 208, the payment processing platform 110 responds to the merchant system 101 with the current exchange rate between the fiat currency amount and the selected digital currency or cryptocurrency, along with the amount to be charged to the customer in the selected cryptocurrency. Alternatively, at step 208 the payment processing platform 110 sends only the exchange rate information, and the merchant system 101 applies this exchange rate to the total amount in fiat currency to determine the amount to be charged to the customer in the selected cryptocurrency. At step 210, the merchant system 101 again displays for the consumer the total amount for the selected goods and services, but now in the digital currency or cryptocurrency selected by the consumer (either in lieu of or in addition to that amount in fiat currency). In addition, the merchant system 101 displays for the consumer an option for continuing with the purchase of the goods and services by paying the displayed amount in the selected digital currency or cryptocurrency to the consumer, such as through a "Proceed with Payment" button on the interface that the consumer can select. Using the interface, the consumer 102 opts to proceed with payment in the selected digital currency or cryptocurrency. In the scenario where the transaction occurs at a brick-and-mortar location, the consumer may ask the cashier or sales associate to pay using digital currency or cryptocurrency, or may use the client-facing interface connected to the POS to select this option.

At step 212, the merchant system 101 begins the payment transaction by sending a request to the payment processing system 110 to start the payment transaction. By way of example, the merchant system 101 has a secure API connection with digital currency payment processing platform 110 and performs an API call that is serviced by the Start Payment API module 121 of the Merchant API 120. At step 214 the Start Payment API module locks the current rate and the amount of the expected cryptocurrency payment associated with the transaction. At step 216, the Start Payment API module is called for the processing engine 150 to get an address of the digital currency wallet generated on digital currency wallet service 133 and associated with the merchant that will receive the cryptocurrency payment from the consumer 102 along with any additional destination information, and responds by sending this address and additional information to the merchant. Depending on the digital currency selected by the merchant or consumer to process the transaction, the address may be a unique address for the transaction, or it may be a general address associated with the merchant's wallet and where the additional destination information includes a "destination tag" or reference number unique to the transaction (provided that the distributed ledger is one that supports the use of destination tags or other unique reference numbers in order to facilitate transactions). For example, where XRP is used for the merchant's wallet service, the Start Payment API module call results in the generation of a general address that is referenced for all payments (*i.e*. , it is reused for all following payments), along with a unique destination tag for each transaction (*i.e.,* the destination tag is different for each transaction).

At step 218, the merchant system 101 displays the address of this wallet to the consumer via an interface. In one embodiment, the merchant system 101 displays the address in the form of a code, such as a QR code, which the consumer 102 can then visually scan using the digital currency wallet 104 operating on the consumer device 103 (or other device on which the digital currency wallet 104 is installed) to retrieve information or a link to information that is embedded in the code. In addition to the address of the merchant's digital currency wallet, the QR code can contain the amount for the transaction as well as additional information needed to process the transaction. This additional information can be destination information that depends on the wallet software being utilized, and can include the transaction, the specific blockchain or distributed ledger for the wallet, the destination tag or reference number, and/or a token identifier. For example, in the case of payments being processed through the XRP Ledger, the QR code can include the destination tag. This additional information in the QR code can also include fee information indicating whether any transaction fee is requested and the amount of any such transaction fee, such as the fee for the transaction in either a total fee amount or a fee per unit of digital currency. In another embodiment, instead of this additional information being embedded in the QR code itself, the QR code contains an embedded link to information from which the consumer's digital currency wallet 104 can read the address and the additional information needed to submit the payment for the transaction. After providing the address to the merchant system 101, the digital currency payment processing platform 110 proceeds to monitor the distributed ledger 105 for the expected payment.

Beginning at step 226 the transaction monitor 131 identifies the distributed ledger 105, for example a blockchain, on which payment is expected to be received based on the address of the digital currency wallet associated with the merchant and monitors the distributed ledger 105 for a payment that corresponds to the expected transaction. Where the payment processing platform 110 generates a unique blockchain address for each payment, the transaction monitor 131 then monitors this address on the blockchain. Where the payment processing platform 110 provides the general blockchain address for the merchant's wallet service along with additional destination information (such as, for example, the destination tag with the unique payment identifier in the case of XRP), then the transaction monitor 131 monitors the address for any transactions with the corresponding additional destination information (*e.g.,* destination tag) on the merchant's address. In this way, the transaction monitor 131 can determine that a transaction listed on the ledger is the one that corresponds to a payment.

At step 228, in connection with monitoring the transactions on the distributed ledger, the payment processing system 110 checks to determine the amount of time that has elapsed since the exchange rate and amount was locked in step 214 in order to determine if the payment delay threshold has been met-in this case, if the amount of time that has elapsed exceeds the lock rate period such that the lock rate has expired and the exchange rate is no longer valid. Providing a delay payment threshold, such as a lock rate time period, helps to protect the merchant and consumer against significant fluctuations in the value of the digital currency payment compared to fiat currency that results from the volatility and exchange rate disparities that are characteristic of digital currencies, and which may result from delays owing to the technology behind digital currencies and cryptocurrencies. Because of the distributed and de-centralized nature of digital currencies and cryptocurrencies, relatively significant amounts of time may pass between the start of the payment transaction, the customer's sending payment of the cryptocurrency, and the time at which the payment transaction is verified and committed to the distributed ledger or blockchain-during which time the relative value of the payment may have fluctuated significantly. In one embodiment, the lock rate period is set to a fixed amount (*e.g.,* within the range of about 5 minutes to 25 minutes, inclusive of whole values, such as 5, 10, 15, 20, or 25 minutes) for all digital currencies. In another embodiment, the lock rate period varies based on a volatility index associated with digital currencies or cryptocurrencies, with a shorter lock rate period (*e.g.,* between about 5 or about 10 minutes, inclusive) being used when the volatility index is at a higher value compared to historical values, and when a longer lock rate period (*e.g*., between about 20 and about 25 minutes, inclusive) being used when the volatility index is at a lower value compared to historical values, or a median lock rate period (*e.g.,* about 15 minutes, or between about 10 minutes and 20 minutes, inclusive) being used when the index is at or near the average historical value. The lock rate period can also be set differently for each digital currency or cryptocurrency based on the volatility index associated with that specific cryptocurrency. Volatility may be determined based on known measurements for determining the volatility of digital currencies and for measuring the variability of the digital currency's value over a given period. For example, the volatility may be based on a volatility index for the specific digital currency, or based on a broader volatility index. If the lock rate time period threshold (or payment delay threshold) has been exceeded, then processing system 110 proceeds to step 330 in Fig. 2D, in which case the system unlocks marks the transaction as expired, unlocks the exchange rate, and designates any subsequently-received payment as late as further described below. In one embodiment, where the merchant does not require that the digital currency payment processing platform 110 perform the conversion and settlement of the digital currency payment into fiat, the merchant can override the lock rate time period.

At step 220, the consumer uses the consumer device 103 to scan the code displayed by the merchant system. As an alternative to the QR code or in addition to it, the digital currency payment processing platform 110 may generate and provide a clickable link to the address of the digital currency wallet associated with the merchant as well as information pertaining to the payment transaction, such as the amount of cryptocurrency for the payment. This link can be embedded in the merchant's interface and provided to the consumer in addition to or in lieu of the code. In another embodiment, the code contains instructions that cause digital currency wallet application 104 on the consumer device 103 to open and populate the requested amount of cryptocurrency and the address information (including any additional destination information) associated with the merchant's digital wallet service. At step 222, the consumer either confirms the payment and sends the cryptocurrency payment to the relevant distributed ledger 105, or fails to do so. If the consumer instructs that the payment should be sent to the distributed ledger 105, then at step 224 the payment transaction is either accepted on the distributed ledger and the transaction is committed onto the ledger, or else it is rejected. In most cases, if the payment is sent into the distributed ledger or blockchain, it will be committed onto the ledger. However, if too low of a network fee is provided then the transaction may not be picked up. If the consumer's payment transaction is accepted on the distributed ledger at step 224, then at step 226 the transaction monitor 131 identifies the existence of the transaction on the distributed ledger or blockchain and recognizes it as corresponding to the requested payment to the merchant for the goods and services. Following a payment request initiated by the merchant in step 212 the system, the transaction monitor 131 checks the distributed ledger or blockchain in real time to determine whether enough confirmations have been processed such that the payment transaction can be confirmed. The number of confirmations needed to confirm the payment transaction are determined by rules stored in the database 140, and are based on the distributed ledger or blockchain type and the amount of the transaction. Once there are enough confirmations on a distributed ledger or blockchain transaction, and assuming lock rate requirements have been met (or overridden), the platform 110 confirms the payment transaction to the merchant system 101.

If the lock rate time period has expired, then the transaction proceeds to step 330 of Figure 2D, as described below. If the locked rate time period has not expired, then at step 232 the payment processing system 110 determines whether the payment amount is correct by comparing the amount actually received from the consumer to the locked amount. If the payment amount is correct, and is equal to the invoiced amount, then at step 234 the payment processing system 110 confirms the transaction for the payment amount whereupon the payment provider commits to settle the invoice amount, less any applicable service fees, to the merchant. After the payment processing system 110 has confirmed the transaction for the payment amount and that lock rate requirements have been met (or overridden), at step 236 the system generates a notification, such as a webhook notification, to notify the merchant that the system has confirmed the receipt of a payment from the consumer corresponding to the invoiced amount for the given transaction such that there is an update to the payment, and sends the notification to the merchant system 101. In response to the notification, the merchant system 101 checks the payment details at step 238 by calling the functionality of the check payment API module 124, which causes the payment processing system to provide the details associated with the payment at step 239, including the status of the payment-in this case indicating the status of the transaction having been confirmed for the payment amount. The digital currency payment processing platform 110 then sends these details to the merchant system where they are received at step 240. At step 241 the merchant system confirms payment and issues a receipt or payment confirmation that is received by the consumer at 242, thereby concluding the transaction in the instance where the payment received from the consumer matches the invoiced amount.

If at step 232 the payment processing system 110 determines that the amount of the payment received from the consumer is less than the invoiced amount (*i.e.,* there is an underpayment), then the transaction proceeds to step 250 of Figure 2B as described below. The underpayment may result from the consumer's digital currency wallet software using less digits for the cryptocurrency amount than requested by the system (for example, having a resolution to the thousandths place instead of the ten thousandths place, or one hundred thousandths place, or smaller) and rounding. Alternatively, a user may err by entering an extra leading zero in a payment or entering an incorrect number, such as transposing numbers (e.g., entering 0.032234 instead of 0.033234 when trying to enter a payment for $1,000 USD at an exchange rate of $30,089.30 USD per 1 Bitcoin). As noted above, one of the characteristics of digital currencies is the disparate and diverging exchange rates (*e.g.,* $1 = ~0.00003 Bitcoin), such that rounding and user entry errors may be more likely and may result in an underpayment that is more substantial as it relates to the overall amount requested from the merchant as compared to the use of traditional currency. The underpayment may also result from the digital currency wallet deducting blockchain transaction fees from the amount entered, such that the amount provided is less than the amount requested. At step 250 the payment processing system 110 checks whether an auto-accept underpayment option is set in the system variables, indicating that the merchant or the payment processing system provider will automatically accept underpayments from a consumer without further action by the merchant, provided that the underpayment meets certain criteria. If the auto-accept underpayment option is not set, then the merchant is given the option to manually confirm the underpayment, as further described below. But if the auto-accept underpayment is set, and the amount of the underpayment received is within a payment amount threshold (an underpayment threshold in this scenario), then the system will automatically accept the payment, despite it being less than the invoiced amount, and will process the transaction without further involvement from the merchant. If the option is set, then at step 252 the system will check to determine if the underpayment is higher than or equal to the merchant's minimum payment threshold. In one example where the invoice amount and currency is $100 USD, and the minimum underpayment threshold is 5%, the automatic underpayment acceptance threshold may be $95 USD. If the amount of the payment received from the consumer on the distributed ledger is higher than or equal to the merchant's minimum payment threshold then the system will automatically proceed to step 274 and will confirm the transaction with the amount lower than originally requested. After this the payment processing system 110 confirms the transaction with an amount lower than originally requested, and sends a webhook notification to the merchant system at step 276. In response to the webhook notification, the merchant system 101 checks the payment details at step 278 via the check payment API. In response to the call to the check payment API, at step 279 the check payment API module 124 provides the details associated with the payment, including that the transaction was confirmed for a lower amount than originally requested by the merchant and the amount for which the transaction was confirmed. The digital currency payment processing platform 110 then sends these details to the merchant system where they are received at step 280. At step 281 the merchant system 101 confirms payment for the amount indicated by the payment processing system-whether for an amount lower than the amount requested (as in the case where the underpayment meets the merchant minimum payment threshold in step 252), or for the full amount requested (as in the case where the underpayment meets the payment processor minimum payment threshold in step 254). At step 282 the merchant system 101 issues a receipt or payment confirmation that is received by the consumer, thereby concluding the transaction.

In one embodiment, the payment processing system will automatically process payments for the full amount invoiced if the underpayment received is within a certain payment threshold set by the payment processing provider. If the merchant has not set the auto-accept underpayment option, or if the amount of the underpayment received does not meet the payment threshold condition requirements set by the merchant (*e.g.,* the underpayment is lower than the merchant minimum payment threshold), the payment processing system may still automatically accept an underpayment and confirm it for the full amount requested if the payment processor has set an option to automatically process payments that fall within this second, payment processor payment threshold. If the payment processing provider has set this option, then at step 254 the system will check to determine if the underpayment is higher than or equal to the payment processor's minimum payment amount threshold condition. If the underpayment is higher than or equal to this payment threshold, then at step 255 the payment processing system will confirm the transaction for the full amount invoiced, before proceeding to the remaining steps of sending a webhook notification to the merchant system at step 276 and the remaining steps for confirming payment and issuing an invoice to the consumer. For example, the payment processor may set a payment threshold of 2.8% of the invoice amount, in which case the system will calculate the percentage of the difference between the underpayment amount and the invoice amount. If the difference is within 2.8% of the invoice amount then the payment processing system will confirm the transaction to the merchant system for the full amount invoiced even though an underpayment was received by the provider.

In general, the payment processor sets the payment threshold in order to ensure that the payment processor receives at least some fees for processing the payment, and does not incur additional fees by processing refunds to the consumer. In this way, the payment amount threshold may be based on the fee charged by the payment provider to the merchant in order to process transactions, and may be less than such fees. For example, if the payment provider charges a 3% transaction fee to the merchant, then the threshold value of 2.8% would ensure that the payment provider still recovers at least some fees in association with the transaction. The threshold may also take into account any other charges incurred by the payment providers, such as transaction fees. For example, if the payment processor incurs a 0.5% conversion fee, then the threshold value may be set to 2.3% instead of 2.8%. By providing the capability of the payment processor to automatically accept an underpayment, the payment processing platform 110 can allow the payment processor to avoid losing additional amounts that might be incurred as a result of attempting to "refund" the digital currency transaction. For example, in attempting to refund a payment that has been confirmed on the distributed ledger or blockchain, the payment processor may incur a transaction fee. By accepting an underpayment, the payment processor can avoid incurring additional fees and still recoup some revenue from the transaction. For this reason, the payment threshold for the payment processor to automatically accept an underpayment may be based on the transaction fee associated with a given distributed ledger or blockchain corresponding to the digital currency wallet. For example, if the distributed ledger or blockchain requires a 0.5% transaction fee, then the payment processor may set a payment threshold value to automatically accept any underpayments within 0.5% of the invoiced amount.

Instead of the payment processing system 110 confirming the transaction for the full amount invoiced, such that the payment processor alone absorbs the underage, at step 255 the payment processing system 110 may confirm the transaction to the merchant for an amount less than the full amount invoiced, but greater than the amount received from the consumer, such that the underage is absorbed by both the merchant and the payment processor. Where the merchant has set an underpayment threshold, the payment processing system 110 may confirm the transaction for an amount up to the merchant underpayment threshold, such that the merchant absorbs an amount of the underage up to the underpayment threshold, and the payment processor absorbs the remainder of the underage. Using the above example where the invoice amount and currency is $100 USD, and the minimum underpayment threshold is 5%, if the fiat amount of the customer's payment is $94 USD resulting in an underage amount equal to $6 USD, then the payment processing system 110 may confirm the transaction for an amount up to underpayment threshold of 5% such that the transaction is confirmed to the merchant system 101 for $95 USD such that the merchant absorbs $5 USD of the underage, with the remaining $1 of the underage being absorbed by the payment processor.

Alternatively, at step 255 the payment processing system 110 may confirm the transaction for an amount such that the underage is split between the merchant and the payment processor in a different manner, such as evenly, and provided that such split does not exceed the merchant underpayment threshold. Again using the above example where the invoice amount and currency is $100 USD, and the minimum underpayment threshold is 5%, if the fiat amount of the customer's payment is $94 USD resulting in an underage amount equal to $6 USD, then the payment processing system 110 may confirm the transaction for $97 USD such that the merchant and the payment processor each absorbs $3 USD of the underage.

If the auto-accept underpayment options for the merchant and payment processor are not set, or if the merchant and payment processor minimum thresholds are not met, then the transaction proceeds by confirming with the merchant whether to accept the underpayment. At step 256 the payment processing system 110 calculates the cryptocurrency amount received to fiat amount. At step 257, the payment processing system 110 then initiates the process to send a webhook notification to the merchant system 101. In response to the webhook notification, the merchant system 101 checks the payment details at step 258 by calling the functionality of the check payment module API 124, which causes the payment processing system to collect the details associated with the pending payment at step 259, including the cryptocurrency amount received, and optionally the difference between the invoiced amount and the received amount. The digital currency payment processing platform 110 then sends these details to the merchant system where they are received at step 260. At step 262, the merchant via the merchant system 101 determines whether the received fiat amount of the customer's cryptocurrency payment is acceptable. If it is not, then the method advances to step 264 where the merchant issues a refund via a call to the refund payment API module 123. In one embodiment, the merchant issues a refund based on the address from which the payment was received and optionally deducts a network transaction fee from the refund amount. In another embodiment the merchant system 101 or payment processing platform sends a request to the consumer to either confirm that the address from which the payment was received should be used for the destination of the refund, or provide the address where they wish to receive the refund. Next, at step 266 the payment processing system 110 sends the cryptocurrency transaction into the distributed ledger 105. At step 268 the transaction is accepted by the distributed ledger or blockchain nodes. Last, at step 270 the payor 102 receives the refund amount that has become available to access in the payor's digital currency wallet 104.

If, on the other hand, at step 262, the merchant system 101 determines that the received fiat amount is acceptable, then the transaction advances to step 272 where the merchant system 101 accepts the underpayment. The payment processing system 110 then confirms the transaction with an amount lower than originally requested at step 274 and initiates the process to send a webhook notification at step 276. Thereafter, the merchant system 101 checks the payment details at step 278 via the check payment API. At step 279 the check payment API module 124 provides the details associated with the payment, including the status of the transaction being confirmed for a lower amount than originally requested by the merchant, along with the amount for which the transaction was confirmed. The digital currency payment processing platform 110 then sends these details to the merchant system where they are received at step 280. At step 281 the merchant system confirms payment and issues a receipt or payment confirmation that is received by the consumer at 282, thereby concluding the transaction.

In an alternative embodiment, where the merchant system 101 accepts the underpayment at step 272 in response to step 262, the payment processing system may confirm the transaction for an amount greater than the underpayment and up to the full amount originally requested. For example, the payment processor or digital exchanges may cover all or a portion of the underage, in which case the payment is confirmed for an amount up to the full amount requested.

As noted above, it is possible that instead of providing the exact amount requested or an underpayment, the consumer may provide an overpayment. The overpayment may result from the consumer's digital currency wallet software using less digits for the cryptocurrency amount than requested by the system (for example, having a resolution to the thousandths place instead of the ten thousandths place, or one hundred thousandths place, or smaller) and rounding up. Alternatively, a user may err by omitting an extra leading zero in a payment or entering an incorrect number (e.g., entering 0.034234 Bitcoin instead of 0.033234 Bitcoin when trying to enter a payment for $1,000 USD at an exchange rate of $USD30089.30 per 1 Bitcoin), or transposing numbers. As noted above, one of the characteristics of digital currencies is the disparate and diverging exchange rates (e.g., $1 = ~0.00003 Bitcoin), such that rounding and user entry errors may be more likely and may result in an overpayment that is more substantial as it relates to the overall amount requested from the merchant as compared to the use of traditional currency. If at step 232 the payment processing system 110 determines that the amount of the payment received is more than the amount invoiced (*i.e.,* there is an overpayment) then the transaction proceeds to step 302 of Figure 2C. At step 302, the payment processing system 110 determines whether the auto-accept overpayment option is set in the system variables, indicating that the merchant or the payment processing system provider will automatically accept overpayments from a consumer without further action by the merchant, provided that the underpayment meets certain criteria. If the auto-accept overpayment option is not set, then the merchant is given the option to manually confirm the overpayment, as further described below. But if the auto-accept overpayment is set, and the amount of the overpayment received is within a payment amount threshold (an overpayment threshold), then the system will automatically accept the payment and will process the transaction without further involvement from the merchant.

If the auto-accept overpayment option is not set, then the transaction advances to step 306 where the payment processing system 110 confirms the transaction with the exact amount as requested; alternatively, if the auto-accept option is set, the transaction proceeds to step 304, as further discussed below. Where the auto-accept option is not set, the transaction proceeds to step 306, where the payment processing system 110 confirms the transaction with the exact amount as requested. Then, at step 308, the payment processing system 110 calculates the overage amount received (*i.e.,* the difference between the expected payment amount and the actual amount received) to an amount in the fiat currency, or fiat amount. After this, the payment processing system 110 initiates the process to send a webhook notification at step 310.

At step 312, the merchant system 101 checks the payment details via a call to the check payment API. In response to the call to the check payment API, at step 313 the check payment API module 124 returns the current details of the payment, including that the transaction was confirmed for the exact amount as originally requested by the merchant and the overage amount in fiat. The digital currency payment processing platform 110 then sends these details to the merchant system where they are received at step 314.

Following this, the merchant then must decide at step 315 whether to accept the overage amount. If the merchant does not want to accept the overage amount, then the merchant system 101 proceeds to refund the payment via a process similar to the one described above starting at step 264, whereby the refund is provided in an amount equal to the difference between the invoiced amount and the received amount (*i.e.*, the overage amount). Referring to Fig. 2C, at step 325, the merchant system 101 first confirms the payment for the amount requested and at step 324 issues an invoice. At step 326, the merchant system 101 initiates a call to the refund payment API module 123, and at step 327 the payment processing system 110 sends the cryptocurrency transaction into the distributed ledger 105. At step 328 the transaction is accepted by the distributed ledger or blockchain nodes. Last, at step 329 the payor 102 receives the refund amount that has become available to access in the payor's digital currency wallet 104.

However, if the merchant does want to accept the overage amount, then the transaction proceeds to step 316 where the merchant system 101 accepts the overpayment including the overage. At step 318 the payment processing system 110 re-confirms the transaction with an amount that was higher than originally requested, and then at step 319 the payment processing system 110 initiates the process to send a webhook notification to the merchant system 101. In response to the webhook notification, the merchant system 101 checks the payment details at step 320 via the check payment API. In response to the call to the check payment API, at step 321 the check payment API module 124 provides the details associated with the payment, including that the transaction was confirmed for the amount that was higher than originally requested by the merchant and the amount for which the transaction was confirmed. The digital currency payment processing platform 110 then sends these details to the merchant system where they are received at step 322. At step 323 the merchant system confirms payment for the amount higher than originally requested and issues a receipt or payment confirmation that is received by the consumer at 324.

If, at step 302, the payment processing system 110 determines that the overpayment option is set, then the transaction advances to step 304 where the payment processing system 110 confirms whether the overpayment is less than the merchant's 101 payment threshold. If the overpayment is not less than the merchant's 101 maximum payment threshold and the overpayment condition is not met, then the payment processing system 100 can proceed in several different ways depending on how it is configured based on the settings and preferences of the merchant and payment processor, including automatically refunding the overage amount, prompting the merchant for acceptance of the overage amount, or rejecting the payment entirely.

If at step 304 the payment processing system is configured to reject the payment entirely if the overpayment exceeds the maximum payment threshold, then the payment processing system 100 sends a notification to the merchant system indicating that a non-compliant payment was received, or noting that a payment was not confirmed, whereupon the merchant system 101 calls the refund payment API module 123 and proceeds to refund the total payment received.

If at step 304 the payment processing system 110 is configured to prompt the merchant for acceptance of the overage amount if the overpayment exceeds the maximum payment threshold, then the system first proceeds to step 306 and confirms the transaction for the exact amount requested. Thereafter, the system proceeds as described above through intermediate steps to step 315, where the merchant system 101 prompts for whether to also accept the overage and proceeds accordingly.

If at step 304 the payment processing system is configured to automatically refund the overage amount if the overpayment exceeds the maximum payment threshold, then the system proceeds as shown in Fig. 2C to step 325 where it confirms the payment for the amount requested and issues a receipt at step 324. The merchant system 101 also proceeds to step 326 and calls the refund payment API module 123, which proceeds to refund an amount equal to the difference between the invoiced amount and the received amount (*i.e.,* the "overage" amount) via the process described above.

On the other hand, if the payment processing system 110 determines that the overpayment, or overage, is less than the merchant's 101 payment threshold at step 304 such that the overpayment threshold condition is met, then the transaction advances to step 318 and the payment processing system 110 confirms the transaction with an amount higher than originally requested, and sends a webhook notification to the merchant system at step 319. In response to the webhook notification, the merchant system 101 checks the payment details at step 320 via the check payment API. In response to the call to the check payment API, at step 321 the check payment API module 124 provides the details associated with the payment, including that the transaction was confirmed for the amount that was higher than originally requested by the merchant and the amount for which the transaction was confirmed. The digital currency payment processing platform 110 then sends these details to the merchant system where they are received at step 322. At step 323 the merchant system confirms payment and issues a receipt or payment confirmation that is received by the consumer at 324.

As noted above from Figure 2A if the lock rate has expired before payment is received, such that the delay threshold is not met, then the transaction proceeds to the steps in Fig. 2D. If at step 228 the lock rate has expired, then the transaction proceeds to step 330 and the rate that was previously locked at step 214 at the start of the transaction is no longer offered by the originally locked rate, and the payment is marked as expired by the payment processing system 110. Next, at step 332 the payment processing system 110 sends a webhook notification alerting the merchant system 101. At step 334 the merchant system 101 checks the payment details by calling the check payment API 124, which at step 335 provides the details of the payment, including the status and the fact that the delay threshold has been exceeded such that rate is no longer available. These details are received by the merchant system 101 at step 336. At that point, the merchant system 101 can take action such as alerting the consumer that the delay period has expired without receipt of payment, and taking such action as cancelling the transaction or re-requesting payment via a new transaction in which the customer can opt to submit payment (substantially in accordance with the process beginning at step 202) with an updated exchange rate and cryptocurrency amount.

At steps 337 and 338, the transaction monitor 131 can also continue to monitor the existence of the transaction on the distributed ledger or blockchain for expired payments, either continually or periodically thereafter, or for a set period of time after the lock rate has expired. When a payment is received on the distributed ledger or blockchain after the lock rate expires, then the payment processing system notes that the late payment has been received. At step 350, the payment processing system 110 calculates the new rate and fiat amount by retrieving the current exchange rate from digital currency exchanges 190 and then using that updated exchange rate to determine the equivalent fiat amount of the payment in the digital currency. At step 351 the payment processing system 110 checks whether an auto-accept late payment option is set in the system variables. If the auto-accept late payment option is not set, then the merchant is given the option to manually confirm the late payment, as further described below. But if the auto-accept late payment is set then at step 352, the payment processing system determines whether the amount of the payment under the new rate and fiat amount is within a threshold set by the merchant. For example, where the payment threshold includes one or more underpayment thresholds (*e.g.,* a first underpayment threshold for the merchant and a second underpayment threshold for the payment processor) then the system determines whether the payment is equal to or greater than the underpayment thresholds such that the payment threshold condition is met for automatic processing of the underpayment notwithstanding the underage, substantially according to the process and steps shown in Fig. 2B. If the amount is not greater than a minimum threshold, such that the underpayment threshold condition is not met, then at step 356 the payment processing system 110 initiates the process to send a webhook notification to prompt the merchant system 101 regarding an update to the status of the payment. Where the payment threshold includes an overpayment threshold then the system determines whether the value of the payment is equal to or less than the overpayment threshold such that the payment threshold condition is met for automatic processing of the overpayment notwithstanding the overage, substantially according to the process and steps shown in Fig. 2C. Again, if the amount is not less than or equal to the maximum threshold, such that the overpayment threshold condition is not met or auto-accept late payment was not set in 351, then at step 356 the payment processing system 110 initiates the process to send a webhook notification.

Next, at step 358, the merchant system 101 responds to the webhook notification generated in step 356 by checking the payment details and status through a call to the check payment API. At step 359, the check payment API module 124 responds with the status of the payment, including that the payment was late and did not meet the thresholds noted above, as well as the new rate and fiat amount. At step 360, the merchant system 101 receives a message containing the payment details and status. After this, at step 361, the merchant determines whether to accept the new rate and fiat amount.

If the merchant does not want to accept the new rate and fiat amount at step 361, then the transaction proceeds to step 362 where the merchant system 101 initiates the process of issuing a refund after setting the refund address and deducting the network transaction fee from the amount (which the merchant can opt to not do as well during step 362). At step 364, the payment processing system 110 sends the cryptocurrency transaction into the distributed ledger 105. At step 366 the distributed ledger 105 accepts the transaction by way of the distributed ledger or blockchain nodes. Finally, the transaction ends at step 368 when the payor 102 receives the refund amount that has become available to access in the payor's digital currency wallet 104.

Alternatively, if at step 361 the merchant does want to accept the new rate and fiat amount, then the transaction proceeds to step 370. At step 370 the merchant system 101 accepts the late payment. At step 372, the payment processing system 110 confirms the transaction with the new rate and fiat amount and then at step 374 sends a webhook notification to the merchant system 101. In response to the webhook notification, the merchant system 101 checks the payment details at step 376 via the check payment API. In response to the call to the check payment API, at step 377 the check payment API module 124 provides the details associated with the payment, including that the transaction was confirmed for the new rate and fiat amount. The digital currency payment processing platform 110 then sends these details to the merchant system where they are received at step 378. At step 379 the merchant system confirms payment and issues a receipt or payment confirmation that is received by the consumer at 380, thereby concluding the transaction.

If at step 352 the amount of the payment under the new rate and fiat amount is within the payment threshold set by the merchants, then the payment processing system proceeds to step 370 and automatically accepts the late payment. Next, the payment processing system 110 confirms the transaction with the new rate and fiat amount at step 372 and sends the webhook notification at step 374. After this, the merchant system 101 checks the payment details via the check payment API at step 376. In response to the call to the check payment API, at step 377 the check payment API module 124 provides the details associated with the payment, including that the payment was accepted via the auto-accept late payment option, that the new rate and fiat amount were within the thresholds set, and further provides the new rate and fiat amount of the confirmed transaction. The digital currency payment processing platform 110 then sends these details to the merchant system where they are received at step 378. At step 379 the merchant system confirms payment and issues a receipt or payment confirmation that is received by the consumer at 380, thereby concluding the transaction.

In an alternative embodiment, the payment processing system 101 may operate to first determine whether a delay requirement, or a delay payment threshold condition, has been met and to then proceed with either rejecting the payment for being outside of the delay requirement, or else processing the payment (as either an overpayment, underpayment, or exact payment) if the delay requirement is met. In this embodiment, the delay payment threshold condition is receiving the anticipated payment within a fixed time period during which the exchange rate is locked in, and the system first monitors to determine whether a transaction corresponding to the payment has appeared on the distributed ledger or blockchain before the lock rate has expired. If so, the system then determines whether the payment received is an overpayment (*i.e.,* the difference between the invoiced amount and the amount of the digital currency received is an overage), an underpayment (*i.e.,* the difference between the invoiced amount and the amount of the digital currency received is an underage), or the exact amount, according to the exchange rate provided to the client and locked in at the start of the payment transaction. If the system determines that a payment has appeared on the distributed ledger or blockchain after the lock rate has expired, such that the delay payment threshold condition is not met, then instead of determining whether there is an overpayment or underpayment the system may automatically operate to reject the payment and refund the consumer, substantially in accordance with the process starting at steps 264, 326, or 362. Alternatively, and as further described above, the system may proceed by conditionally accepting the payment after the lock rate has expired by retrieving an updated exchange rate when the payment appears on the distributed ledger, and then accepting the delayed payment provided that the amount of the digital payment under the updated exchange rate is such that the difference (be it an overage or an underage) falls within the payment thresholds set by merchant and/or the payment processor.

Fig. 3 shows the various alternative digital currency payment processing scenarios and outcomes implemented through the use of the digital currency payment processing platform 110, according to an embodiment of the invention. Where an underpayment is received from the consumer, the payment processing platform 110 and other components of system 100 operate consistent with the steps as shown and described with reference to Fig. 2B, with such modifications in order to provide the steps and outcomes shown in the overpayment process 400. Where an overpayment is received from the consumer, the payment processing platform 110 and other components of system 100 operate consistent with the steps as shown and described with reference to Fig. 2C, with such modifications in order to provide the steps and outcomes shown in the overpayment process 500. Where the system implements a delay-time period threshold (or payment delay threshold), the payment processing platform 110 and other components of system 100 operate consistent with process 600, wherein when the payment delay threshold is met the digital payment is processed according to whether it is an equal payment, or else the underpayment process 400 or overpayment process 500. When the payment delay threshold is not met, the payment processing platform 110 and other components of system 100 operate consistent with the steps as shown and described with reference to Fig. 2D, in which the payment is either rejected and the transaction is declined and a refund is issued as needed, or it can be processed with the updated exchange rate according to either the underpayment process 400 or overpayment process 500 depending on the fiat value of the digital currency payment from the consumer according to the updated exchange rate.

In another embodiment, illustrated in Fig. 4, the system and method is adapted to generate a modified transaction for the merchant to provide to the consumer in the event that the payment amount threshold conditions are not met, whether as a result of error involving entering the digital payment amount, or a delay in entering the payment that results in a failure to meet the payment delay threshold condition and expiration of the rock late exchange rate, or some other reason relating to the above-identified issues associated with digital currency payments. In particular, the payment processing platform 110 and other components of system 100 operate consistent with the steps as previously shown and described to provide the steps and outcomes shown in the modified transaction process 700. For example, in a transaction involving the purchase by the consumer of 500 items from the merchant for the equivalent of $1,000 USD in Bitcoin (0.033234 Bitcoin at an exchange rate of rate of $30,089.30 USD per 1 Bitcoin), the consumer may cause a transaction entry equivalent to $969.90 USD to be entered into the distributed ledger, resulting in an underage payment. This underpayment may be caused by a consumer error in submitting the payment transaction (*i.e.,* one that results in 0.032234 Bitcoin being sent by the consumer to the distributed ledger instead of 0.033234 Bitcoin being sent), or by a failure to meet the delay payment threshold condition that results in an expiration of the lock rate and the use of an updated exchange rate that results in less of an equivalent amount in the fiat currency (*i.e*., an updated exchange rate of $29,183.97 USD per 1 Bitcoin, rendering the 0.033234 Bitcoin to be equal to $969.90 USD instead of $1,000 USD). Regardless of the reason, the transaction entry underpayment may fail to meet the payment threshold conditions set by the merchant or the consumer. In the present example, where the payment threshold is within 3.0% of the invoiced amount of ($1000 USD), or is an underpayment threshold of no less than 3.0% of the invoiced amount ($1000 USD) the underpayment of $969.90 would fall just below the threshold of $970 and would not satisfy the threshold condition.

Rather than accepting the underpayment in fulfillment of the original transaction (and realizing a loss of revenue), or attempting to generate a refund payment to the consumer (which may involve incurring additional transaction charges), the payment processing system 110 modifies the transaction to include an additional payment by the consumer for the underage. In response to an underpayment at step 232, the payment processing system 110 generates a notification to the merchant system 101 that a modified transaction is available and provides such information to the merchant system through the check payment API. Under the modified transaction, the additional payment can be provided by the consumer in the fiat currency, or in the digital currency, or the option can be presented to the consumer to the select either the fiat currency, or the digital currency from the original transaction, or optionally a different digital currency (or a combination thereof). Using the present example, the additional payment amount would be $30.1 USD in the fiat currency and either 0.00100 Bitcoin (at an exchange rate of rate of $30,089.30 USD per 1 Bitcoin) or 0.00103 (at the updated exchange rate of $29,183.97 USD per 1 Bitcoin) depending on the scenario that resulted in the underpayment. Depending on the preferences of the merchant, the proposed modified transaction is either automatically presented to the consumer via the merchant system 101, or a notification is generated to the merchant system 101 regarding the underpayment and the availability of the modified transaction whereupon the merchant system 101 retrieves the details of the modified transaction through the check payment API and then selects between accepting the underpayment in fulfillment of the original transaction, declining the original transaction and refunding the payment to the consumer, or presenting the modified transaction to the consumer.

After the merchant system 101 presents the modified transaction to the consumer, the merchant system 101 responds by notifying the payments system 110 of the response to the proposed modified transaction. If the consumer responds to the modified transaction by submitting the additional payment via the same digital currency from the original transaction, then the payment processing system processes the additional payment substantially in accordance with the process outlined above starting at step 212, where the exchange rate used to calculate the additional payment is locked in and the distributed ledger is monitored for an additional payment that meets the payment amount thresholds and payment delay threshold. If the consumer responds to the modified transaction by submitting the additional payment via a different digital currency, then the payment processing system processes the additional payment substantially in accordance with the process outlined above starting at step 202, with the payment processing system retrieving a second exchange rate to determine a market value of the second, different digital currency and using the second exchange rate to determine an amount of the second digital currency required to provide the additional payment. Once the additional payment is received (either in the original digital currency or in the different digital currency), the payment processing system confirms the transaction and a receipt is generated to the consumer.

In another embodiment, the system and method above are adapted to process payments for transactions involving the purchase of variable quantities of goods or services at a set rate. Such fixed-rate, variable quantity transactions might involve, for example, the purchase of blocks of minutes or data usage connected with a payment plan, or using the digital currency to purchase fiat currency or a different digital currency. In accordance with this embodiment, the payment processing system 110 generates a modified transaction where the quantity of the goods or services is changed to reflect the amount of the digital currency provided by the consumer on the distributed ledger. Where the amount of the digital currency is less than the invoiced amount, such that there is an underage, then the quantity of goods or services is reduced on a pro rata basis according to underage and the per unit price of the goods or services. Using the above example of a transaction involving the purchase by the consumer of 500 items from the merchant for the equivalent of $1,000 USD in Bitcoin (0.033234 Bitcoin at an exchange rate of rate of $30,089.30 USD per 1 Bitcoin), the per unit cost is $2 USD per item. Where the amount of the digital currency provided by the consumer is equivalent to $969.90 USD (again, whether the result of an error in submitting the payment transaction, or a delay in payment that requires the use of an updated exchange rate), resulting in an underage of approximately $30 USD, then the payment processing system generates a modified transaction by reducing the quantity of the widgets by 15 to 485, according to the underage of approximately $30 and the per widget cost of $2. The merchant system 101 displays the proposed modified transaction to the consumer, who may then opt to proceed with the modified transaction. Once the consumer confirms the modified transaction, the payment processing system 110 confirms the modified transaction instead of the original transaction and a receipt is generated to the consumer.

Multiple embodiments are described herein, including the best mode known to the inventors for practicing the claimed invention. Of these, variations of the disclosed embodiments will become apparent to those of ordinary skill in the art upon reading the foregoing disclosure. The inventors expect skilled artisans to employ such variations as appropriate (e.g., altering or combining features or embodiments), and the inventors intend for the invention to be practiced otherwise than as specifically described herein. In addition, while the invention has been described in terms of several preferred embodiments, it should be understood that there are many alterations, permutations, and equivalents that fall within the scope of this invention. It should also be noted that there are alternative ways of implementing both the process and apparatus of the present invention. For example, steps do not necessarily need to occur in the orders shown in the accompanying figures, and may be rearranged as appropriate. It is therefore intended that the appended claim includes all such alterations, permutations, and equivalents as fall within the true spirit and scope of the present invention.

## Claims

1. A method for processing, on behalf of a merchant, a payment from a consumer for a transaction, wherein the payment is in the form of a digital currency, the method comprising:
setting a first payment threshold condition;
receiving from the merchant a request to process the payment, the request including an invoiced amount;
monitoring a distributed ledger for a transaction entry representing the payment from the consumer, wherein the transaction entry includes an amount of the digital currency from the consumer;
performing a payment differential detection process to determine a difference between the invoiced amount and the amount of the digital currency;
determining whether the difference satisfies the first payment threshold condition; and
causing the transaction to be confirmed to the merchant in response to the difference satisfying the first payment threshold condition.

2. The method of claim 1 wherein the first payment threshold condition is a first underpayment threshold condition and where the difference between the invoiced amount and the amount of the digital currency is an underage.

3. The method of claim 2 wherein the underpayment threshold condition is set according to an amount of underage that the merchant is willing to accept in order to complete the transaction.

4. The method of claim 2 wherein the underpayment threshold condition is set according to an amount of underage that the payment processor is willing to accept in order to process the transaction on behalf of the merchant.

5. The method of claim 1 wherein the step of causing the transaction to be confirmed to the merchant in response to the difference satisfying the first payment threshold condition comprises confirming the transaction for the amount of the digital currency from the consumer.

6. The method of claim 2 further comprising:
setting a second underpayment threshold condition;
determining, where the difference does not satisfy the first underpayment threshold condition, whether the underage satisfies the second underpayment threshold condition; and
causing the transaction to be confirmed to the merchant in response to the underage satisfying the second underpayment threshold condition.

7. The method of claim 6 wherein the step of causing the transaction to be confirmed to the merchant in response to the underage satisfying the second underpayment threshold condition comprises confirming the transaction for the invoiced amount.

8. The method of claim 1 further comprising generating a refund payment to the consumer for the amount of the digital currency in response to the difference not satisfying the first payment threshold condition.

9. The method of claim 1 further comprising:
generating, where the difference does not satisfy the first payment threshold condition, a notification of an amount of the difference;
prompting the merchant for a confirmation to accept the amount of the difference; and
causing the transaction to be confirmed to the merchant in response to the confirmation to accept the amount of the difference.

10. The method of claim 9 wherein the difference is an underage.

11. The method of claim 1 further comprising:
setting a payment delay threshold condition;
determining whether a timing of the transaction entry satisfies the payment delay threshold condition; and
wherein the steps of performing the payment differential detection process, determining whether the difference satisfies the first payment threshold condition, and causing the transaction to be confirmed to the merchant, are only implemented where the timing of the transaction entry satisfies the payment delay threshold condition.

12. The method of claim 1 wherein the first payment threshold condition is an overpayment threshold condition and where the difference between the invoiced amount and the amount of the digital currency is an overage.

13. The method of claim 12 wherein causing the transaction to be confirmed to the merchant in response to the difference satisfying the first payment threshold condition comprises:
confirming the transaction for the invoiced amount; and
generating a refund payment to the consumer for the overage amount.

14. The method of claim 12 wherein causing the transaction to be confirmed to the merchant in response to the difference satisfying the first payment threshold condition comprises confirming the transaction for the amount of the digital currency from the consumer including the overage.

15. The method of claim 1 wherein the digital currency is a cryptocurrency, and wherein the distributed ledger is a blockchain.

16. The method of claim 1 further comprising the steps of:
retrieving an exchange rate between the digital currency and a fiat currency in response to receiving from the merchant a request to process the payment;
retrieving an updated exchange rate between the digital currency and the fiat currency after a delay; and
wherein the payment differential detection process is based on the amount of the digital currency in the fiat currency according to the updated exchange rate

17. The method of claim 2 further comprising the step of generating, where the difference does not satisfy the first underpayment threshold condition, a modified transaction for the consumer.

18. The method of claim 17 wherein the modified transaction comprises an additional payment equal to the underage.

19. The method of claim 17 wherein the modified transaction comprises a reduced quantity of goods or services for the transaction.

20. A method for processing, on behalf of a merchant, a payment from a consumer for a transaction, wherein the payment is in the form of a digital currency, the method comprising:
setting a payment delay threshold condition;
receiving from the merchant a request to process the payment, the request including an invoiced amount;
monitoring a distributed ledger for a transaction entry representing the payment from the consumer, wherein the transaction entry includes an amount of the digital currency from the consumer;
performing a payment timing determination process to determine whether the transaction entry meets the payment delay threshold condition;
causing the transaction to be confirmed to the merchant in response to the transaction entry meeting the payment delay threshold condition.

21. The method of claim 20 further comprising the steps of:
retrieving an exchange rate between the digital currency and a fiat currency in response to receiving from the merchant a request to process the payment; and
wherein the payment delay threshold condition includes a period of time for which the exchange rate is locked for the transaction.

22. The method of claim 20 further comprising:
setting a payment amount threshold condition;
performing a payment differential detection process to determine a difference between the invoiced amount and the amount of the digital currency;
determining whether the difference between the invoiced amount and the amount of the digital currency meets the payment amount threshold condition; and
wherein causing the transaction to be confirmed to the merchant is further in response to the difference satisfying the payment amount threshold condition.

23. The method of claim 20 further comprising:
setting a payment amount threshold condition; and
performing, in response to the transaction entry not meeting the payment delay threshold condition, a payment differential detection process to determine a difference between the invoiced amount and the amount of the digital currency;
determining whether the difference between the invoiced amount and the amount of the digital currency meets the payment amount threshold condition; and
causing the transaction to be confirmed to the merchant in response to the difference between the invoiced amount and the amount of the digital currency meeting the payment amount threshold condition.

24. The method of claim 23 wherein the payment differential detection process comprises retrieving an updated exchange rate between the digital currency and the fiat currency and wherein the difference between the invoiced amount and the amount of the digital currency is determined based on the amount of the digital currency in the fiat currency according to the updated exchange rate.

25. The method of claim 20 wherein the merchant sets the payment delay threshold condition.

26. The method of claim 20 wherein the payment processor sets the payment delay threshold condition.
